Europäisches Patentamt

European Patent Office

Office européen des brevets

(11) Publication number: **0 304 124**
**A2**

## EUROPEAN PATENT APPLICATION

(21) Application number: **88201726.2**

(22) Date of filing: **11.08.88**

(51) Int. Cl.⁴: **C08L 53/02 , C08J 5/18 , D04H 1/42 , D01F 6/28**

(30) Priority: **20.08.87 US 87477**

(43) Date of publication of application:
**22.02.89 Bulletin 89/08**

(84) Designated Contracting States:
**BE DE ES FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Himes, Glenn Roy**
**11615 Normont Drive**
**Houston Texas 77070(US)**

(74) Representative: **Aalbers, Onno et al**
**P.O. Box 302**
**NL-2501 CH The Hague(NL)**

(54) **Elastomeric fibres, structures fashioned therefrom and elastomeric films.**

(57) An elastomeric fibre or film prepared from a composition comprising at least one block copolymer containing at least two polymeric blocks containing predominantly monoalkenyl aromatic hydrocarbon monomer units having a weight-average molecular weight within the range from 4,000 to 50,000 and at least one polymeric block containing predominantly hydrogenated conjugated diolefin monomer units having a weight-average molecular weight within the range from 10,000 to 200,000, a relatively low molecular weight polymer selected from the Group consisting of anionic styrene homopolymers, alpha-methylstyrene homopolymers, hydrogenated styrene, copolymers of alpha-methylstyrene and styrene and mixtures thereof and may contain a wax.

In particularly preferred embodiments, the elastomeric fibre or film will contain at least one A-B-A triblock copolymer and an A-B' diblock copolymer. In even more preferred embodiments, the elastomeric fibres or films will contain at least two A-B-A triblock copolymers and at least one A-B' diblock copolymer.

EP 0 304 124 A2

EP 0 304 124 A2

# ELASTOMERIC FIBRES, STRUCTURES FASHIONED THEREFROM AND ELASTOMERIC FILMS

This invention relates to polymeric fibres, to structures fashioned therewith and to polymeric films. More particularly, this invention relates to elastomeric polymer fibres, to nonwoven fabrics and webs prepared therewith and to elastomeric polymer films.

Nonwoven webs containing various polymeric fibres are, of course, well known in the prior art. Processes for preparing nonwoven mats from thermoplastic fibres have been described in e.g. Naval Research Laboratory Report No. 111437, NRL Report 5265, and in an article appearing in Industrial and Engineering Chemistry, Vol. 48, No. 8 (1956), pp. 1,342-1,346. Such processes are also described in U.S. Patent Nos. 2,374,540; 2,411,659; 2,411,660; 2,437,363 and 3,532,800. Still other methods for preparing the same or similar nonwoven webs are described in British Patent Nos. 1,055,187 and 1,215,537 and in U.S. Patent Nos. 3,379,811 and 3,502,763. A method for preparing nonwoven webs from elastomeric fibres by spray spinning a rubber solution is described in U.S. Patent No. 2,950,752. Methods for preparing nonwoven fabrics and/or nonwoven webs from elastomeric fibres by melt blowing an elastomeric composition are described in U.S. Patent Nos. 4,323,534 and 4,355,425. As indicated at least in U.S. Patent No. 4,323,534, a fatty acid or fatty alcohol must be incorporated in an amount of from 20 wt% to 50 wt% into the elastomer composition to prevent melt fracture of the elastomer during processing. Similarly, polymeric films are well known in the prior art.

As is also well known in the prior art, elastomeric fibres and nonwoven fabrics and webs prepared therewith as well as elastomeric films have potential utility in a broad range of applications. For example, it has been proposed to use elastic fibres in elastic bands for clothing and to use nonwoven structures prepared therewith in the preparation of disposable and semi-disposable garments and in elastic bandages and wrappings. Moreover, it has been proposed to use elastic films in such applications as back sheets for diapers, elastic closures, shower caps and in similar applications where elastic properties would be particularly desirable. As is further well known, preparation of such fibres and films using extrusion techniques and particularly melt blowing techniques would be most desirable since these techniques are, generally, most economical, safer and, generally, can be easily controlled, thereby ensuring consistent production. The methods heretofore proposed, however, for preparing elastomeric fibres and films using extrusion technology have not be completely successful since these techniques generally require the inclusion of one or more materials which must subsequently be separated from the fibres or films thus produced before they can be used in nonwoven fabrics and/or webs and/or used in the manufacture of the hereinbefore mentioned disposable or semi-disposable articles of manufacture. Such separation is, of course, generally, difficult to accomplish. Therefore, the need for a composition which can be extruded into an elastic fibre or film which can then be used directly in the preparation of nonwoven fabrics and/or nonwoven webs and/or used directly in the preparation of disposable or semi-disposable articles of manufacture is still existing and an object of the present invention is to provide such an improved directly processable composition.

As result of extensive search and experimentation there was now surprisingly found, that the foregoing and other disadvantages of the prior art elastic polymeric fibres and films can be avoided or at least reduced with a fibre of film prepared from a polymeric composition comprising:

(a) at least one elastomeric block copolymer comprising at least two polymeric blocks containing predominantly monoalkenyl aromatic hydrocarbon monomer units (A) and at least one polymeric block containing predominantly hydrogenated conjugated diolefin monomer units (B) and

(b) a relatively low molecular weight polymer selected from the Group consisting of anionic polystyrene, alpha-methylstyrene homopolymers, hydrogenated polystyrene and alpha-methylstyrenestyrene copolymers and mixtures thereof,

(c) more particularly, the polymeric composition will contain from about 5 parts to about 50 parts, by weight, of the relatively low molecular weight polymer (C) per 100 parts, by weight, of block copolymer.

It is important to the present invention that the block copolymer be selectively hydrogenated to saturate at least about 80% of the ethylenic unsaturation remaining in the polymer after its preparation. It is also important to the present invention that the relatively low molecular weight polymer have a weight-average molecular weight within the range from 1,000 to 17,000. The polymeric composition useful for preparing the elastomeric fibres and films of this invention may in addition to the beforementioned components also comprise from 0 parts to 50 parts, by weight, of a wax per 100 parts, by weight, of block copolymer.

The polymeric composition useful for preparing the elastic fibres and films of this invention may also comprise one or more block copolymers comprising a single polymeric block containing predominantly monoalkenyl aromatic hydrocarbon monomer units (A) and a single polymeric block containing predomi-

2

nantly conjugated diolefin monomer units (B'). The polymeric composition useful for preparing the elastomeric fibres and films of this invention may also comprise other materials such as fillers, extender oils, stabilizers, pigments, lubricants, flow-improver resins, resin tackifiers and the like.

The elastomeric fibres and films according to the present invention can be used directly; i.e., without subsequent treatment to separate an incompatible component therefrom, in the preparation of various nonwoven structures and/or elastic articles of manufacture. The elastomeric fibres and films can be prepared using any of the methods known in the prior art including extrusion techniques. The nonwoven structures may also be prepared using any of the techniques known in the prior art such as those associated with spun-bonding, melt blowing, melt spinning, spun-lacing and the like.

As used herein in connection with the structure of the block copolymer, the recitation "predominantly" is intended to mean that the polymeric block will contain at least 85 wt% of the specified monomer but leave open the option of incorporating other copolymerizible monomers including monomers that may be contained in other polymeric blocks within the block copolymer.

In general, any of the elastomeric block copolymers comprising at least one polymeric block containing predominantly monoalkenyl aromatic hydrocarbon monomer units and at least one polymeric block containing predominantly conjugated diolefin units known in the prior art may be selectively hydrogenated and used in preparing the elastomeric fibres and films in this invention. Suitable block copolymers which may be hydrogenated and used in preparing the elastomeric fibre of this invention, then, include those described in U.S. Patent Nos. 3,231,635; 3,265,765 and 3,322,856.

In general, suitable block copolymers may be represented by the general formula:

$$A_x\text{-}(B\text{-}A)_y\text{-}B_z$$

wherein A is a polymeric block comprising predominantly monoalkenyl aromatic hydrocarbon monomer units; B is a polymeric block comprising predominantly hydrogenated conjugated diolefin monomer units; x and z are, independently, a number equal to 0 or 1 and y is a whole number from 1 to 25. In general, the monoalkenyl aromatic hydrocarbon monomer used in the preparation of polymeric block A may be any of the monoalkenyl aromatic hydrocarbon monomers known in the prior art. Suitable monoalkenyl aromatic hydrocarbon monomers, then, include styrene, alkyl-substituted styrenes, alkoxy-substituted styrenes, vinyl naphthalene, vinyl toluene and the like. In general, any of the conjugated diolefins known in the prior art may be used either alone or in combination to prepare polymeric block B. Suitable conjugated diolefins, then, include conjugated diolefins having from 4 to 12 carbon atoms such as 1,3-butadiene, isoprene, piperylene, methylpentadiene, phenylbutadiene, 3,4-dimethyl-1,3-hexadiene, 4,5-diethyl-1,3-octadiene and the like. In general, each A polymeric block of block copolymers useful in preparing the elastic fibres and films of this invention may have the same or a different weight-average molecular weight within the range from 4,000 to 50,000 and preferably from 4,000 to 9,000 and each B polymeric block in block copolymers having at least two blocks containing predominantly monoalkenyl aromatic hydrocarbon monomer units, may have the same or a different weight-average molecular weight within the range from 10,000 to 200,000 and preferably from 55,000 to 90,000, while the B polymeric blocks, which are referred to as B' polymeric blocks throughout this specification in polymers containing a single polymeric block containing predominantly monoalkenyl aromatic hydrocarbon monomer units may have the same or a different weight-average molecular weight within the range from 2,500 to 150,000.

The block copolymers useful in preparing the elastic fibres and films of this invention may be hydrogenated using any of the techniques known in the prior art to be suitable for such hydrogenation. In general, the hydrogenation conditions employed will be selected so as to ensure that at least 80% and preferably at least 95% of the ethylenic unsaturation in the conjugated diolefin polymer blocks after preparation of the polymer will be hydrogenated. The hydrogenation conditions will also be selected so as to ensure that less than 20%, preferably less than 10% and most preferably less than 5% of the aromatic unsaturation is hydrogenated.

In general, satisfactory methods for selectively hydrogenating the block copolymers useful in preparing the elastic fibres and films of this invention involve the use of a suitable catalyst or catalyst precursor, particularly a catalyst or catalyst precursor comprising a Group VI or Group VIII metal atom. Suitable catalysts and methods for hydrogenating such block polymers are described in U.K. Patent Specification No. 1,030,306, and in U.S. Patent No. 3,700,633. Especially the process disclosed in U.S. Patent No. 3,700,633 is particularly preferred for hydrogenating the block copolymers useful in preparing the elastic fibres and films of this invention. In this process, hydrogenation of the block copolymer is accomplished in the same solvent as was used during polymerization. The hydrogenation is accomplished in the presence of a catalyst comprising the reaction product of an aluminium alkyl and a nickel or cobalt carboxylate or alkoxide. In general, the hydrogenation is accomplished at a temperature within the range from about 25 °C to about 175 °C at a hydrogen partial pressure below 345 bar (5,000 psig) and, usually, within the range from 17 bar (250 psig) to 103 bar (1,500 psig). In general, contacting times within the range from about five minutes to about eight hours will be sufficient to permit the desired degree of hydrogenation.

While, as indicated hereinbefore, any elastomeric block copolymer comprising at least one polymeric block containing predominantly monoalkenyl aromatic hydrocarbon monomer units and at least one polymeric block containing predominantly conjugated diolefin units may be selectively hydrogenated and used in the preparation of the elastic fibres and films of this invention, lower molecular weight elastomeric block copolymers will, preferably, be used since this will ensure a lower viscosity of the blend used to prepare the elastomeric fibres and films. In this regard, and as is well known in the prior art, melt rheology of the polymeric composition used to prepare a fibre or film is a critical consideration in most, if not all, of the processes heretofore proposed for preparing such fibres and films.

According to a preferred embodiment of the present invention, the polymeric composition will comprise either a single A-B-A triblock, a blend of different A-B-A triblock copolymers, a blend of an A-B-A triblock copolymer and an A-B' diblock copolymer or a blend of two or more different A-B-A triblock copolymers and one or more A-B' diblock copolymers. The principal consideration in selecting one or more of these beforementioned copolymers will be the apparent viscosity of the blend used to prepare the elastic fibres or films of this invention at the conditions employed in making said elastic fibres or films.

In general in the A-B-A triblock copolymers and A-B' diblock copolymers the blocks A are preferably predominant polystyrene blocks, while the blocks B or B' are preferably predominant hydrogenated polybutadiene blocks.

In a preferred embodiment, then, the blend used to prepare the elastomeric fibre or film will comprise:

(a) from 0 to 100 parts by weight of an A-B-A triblock copolymer wherein each A is a polymeric block containing predominantly monoalkenyl aromatic hydrocarbon monomer units having a weight-average molecular weight within the range from 5,000 to 9,000, more preferably a weight-average molecular weight within the range from 7,000 to 7,500 and most preferably a weight-average molecular weight of 7,200; and wherein B is a polymeric block containing predominantly conjugated diolefin monomer units which have been hydrogenated so as to saturate at least about 80% of the ethylenic unsaturation in the polymer block after its preparation and more preferably such that at least 95% of the initial ethylenic unsaturation in the polymer block is saturated and having a weight- average molecular weight within the range from 30,000 to 50,000, more preferably a weight-average molecular weight within the range from 33,000 to 38,000 and most preferably having a weight-average molecular weight of 35,000;

(b) from 100 to 0 parts, by weight, of a blend of an A-B-A triblock copolymer wherein A is a polymeric block containing predominantly monoalkenyl aromatic hydrocarbon monomer units having a weightaverage molecular weight within the range from 4,000 to 7,000, more preferably having a weight-average molecular weight within the range from 5,000 to 6,000 and most preferably having a weight-average molecular weight of 5,300; and wherein B is a polymeric block containing predominantly conjugated diolefin monomer units which have been hydrogenated such that at least 80% of the ethylenic unsaturation contained in the polymer block after preparation is saturated and most preferably such that at least 95% of the ethylenic unsaturation in the polymer block after preparation is saturated and having a weight-average molecular weight within the range from 55,000 to 90,000, more preferably having a weight-average molecular weight within the range from 65,000 to 80,000 and most preferably having a weight-average molecular weight of 73,000; and

(c) an A-B' diblock wherein A is a polymeric block containing predominantly monoalkenyl aromatic hydrocarbon monomer units having a weight-average molecular weight within the range from 4,000 to 9,000, more preferably a weight-average molecular weight within the range from 5,000 to 7,500 and most preferably a weight-average molecular weight of 5,300 and wherein B' is a polymeric block containing predominantly conjugated diolefin monomer units which are hydrogenated such that at least 80% of the ethylenic unsaturation in the polymer block after preparation is saturated and most preferably such that at least 95 wt% of the ethylenic unsaturation in the polymer block after preparation is saturated and having a weight-average molecular weight within the range from 7,500 to 67,500, more preferably, having a weight-average molecular weight within the range from 8,250 to 60,000 and most preferably having a weight-average molecular weight of 36,500; said blend comprising from 55 wt% to 85 wt% of the A-B-A triblock copolymer and from 45 wt% to 15 wt% of the A-B' diblock copolymer.

As indicated hereinbefore, the composition used to prepare the elastic fibres and films of this invention will also comprise from 5 to 50 parts, by weight, per 100 parts, by weight of combined block copolymer of a relatively low molecular weight polymer selected from the group consisting of anionic homopolymers of styrene, homopolymers of alpha-methylstyrene, hydrogenated homopolymers of styrene and copolymers of alpha-methylstyrene and styrene. In general, the relatively low molecular weight polymer will have a weight-average molecular weight within the range from 1,000 to 17,000. In a preferred embodiment, the composition used to prepare the elastic fibre or film of this invention will comprise from 8 to 35 parts, by weight, of the relatively low molecular weight polymer per 100 parts, by weight, of combined block copolymer and in a most preferred embodiment, the composition will contain from 8 to 20 parts, by weight, of the relatively low molecular weight polymer per 100 parts, by weight, of combined block copolymer. Also in a preferred embodiment, the relatively low molecular weight polymer will have a weight-average molecular weight within the range from 1,900 to 4,500. In a most preferred embodiment, the composition used to prepare the elastic fibres and films of this invention will comprise anionic polystyrene since this polymer, generally, results in a composition having the lowest viscosity, at least when compared to compositions containing one of the other low molecular weight polymers useful in the composition to make the elastic fibre or film of this invention.

The anionic polystyrene useful in the composition used to prepare the elastic fibre or film of this invention is, simply, a polystyrene prepared via anionic initiated polymerization. Anionic polymerization is, of course, well known in the prior art and such polymerization is taught, for example, in U.S. Patent Nos. 3,135,716; 3,150,209; 3,496,154; 3,498,960; 4,145,298 and 3,238,202. Anionic polymerization is also taught in U.S. Patent Nos. 3,231,635; 2,265,765 and 3,322,856. In general, anionic polymerization is accomplished by contacting the monomer, in this case styrene, with an organo alkali metal compound in a suitable solvent at a temperature within the range from -150 °C to 300 °C. Particularly effective polymerization initiators are organo lithium compounds having the general formula:

$$RLi_n$$

wherein R is an aliphatic, cycloaliphatic, aromatic or alkyl-substituted aromatic hydrocarbon radical having from 1 to about 20 carbon atoms and n is an integer of 1 to 4. Surprisingly, the anionic polystyrene used in the composition to prepare the elastic fibres and films of this invention reduces the viscosity of the resulting composition significantly more than polystyrenes prepared via other polymerization techniques known in the prior art.

The relatively low molecular weight homopolymer of alpha-methylstyrene, the hydrogenated polystyrene and the alpha-methylstyrene-styrene copolymer useful in the composition to prepare the elastic fibres and films of this invention may all be prepared in accordance with any of the methods known in the prior art, including polymerization via anionic initiation. Such polymers are, of course, well known in the prior art. In general, the hydrogenated polystyrene will have at least 80% and preferably at least 95% of the aromatic unsaturation hydrogenated.

As also indicated hereinbefore, the composition used to prepare the elastic fibres and films of this invention will also comprise from 0 to 50 parts, by weight, per 100 parts, by weight, of combined block copolymer of a wax. In general, any of the paraffinic and/or microcrystalline waxes known in the prior art may be used in the composition to prepare the elastic fibres and films of this invention. A particularly preferred wax for use in the composition is available commercially under the trade name Shellwax 100.

As still further indicated hereinbefore, the composition used to prepare the elastic fibres and films of this invention may also contain other components such as fillers, extender oils, stabilizers, pigments, flow improver resins, tackifier resins, lubricants and the like. Suitable fillers include calcium carbonate, talc, barium sulphate, silica and the like. Suitable extender oils include any of the paraffinic and/or naphthenic oils known in the prior art to be useful as extender oils. A white, paraffinic, mineral oil is a particularly effective extender oil. Other oils that may, however, be used in the composition include commercially available oils as Penreco 4434, a product of Pennzoil Corporation; Shellflex 371, available from Shell Oil Company; Tufflo 6056, available from Arco Chemical Company; Kaydol, available from Witco Chemical Company and the like. Suitable stabilizers include sterically hindered phenol-type anti-oxidants which may be used alone or in combination with various sulphur containing compounds such as thioesters, thiocarbamates and the like, titanium dioxide, zinc oxide and the like. Suitable pigments include titanium dioxide, carbon black and the like. Suitable flow improver resins include polypropylene and polyethylene resins, copolymers of vinyl toluene and alpha-methylstyrene and the like. Suitable tackifier resins include various hydrogenated petroleum hydrocarbon resins and the like. Suitable lubricants include aluminium stearate, barium stearate, calcium stearate, magnesium stearate, zinc stearate and the like. In general, these components, when used, will be used at concentrations well known in the prior art to impart the properties which each is well known to impart.

In general, any of the techniques known in the prior art for blending polymeric components either alone or in combination with other components such as the fillers, extender oils, stabilizers, pigments, lubricants and the like may be used to combine the various components used in the composition to form the elastic fibres and films of this invention. Suitable blending techniques, then, include solution blending, solid state physical admixture, molten state admixture, extrusion admixture, roll milling and the like. Moreover, any combination of these techniques may be used. Of these techniques, blending solutions of each of the

5

components will, generally, produce the most uniform blend, however, mixing in the molten state with equipment such as Banbury mixers, Brabender mixers, extruders, roll mills and the like will, most often be more convenient. In general, molten phase admixture will be accomplished at temperatures within the range from 140 °C to 270 °C but higher and lower temperatures may in some cases at least, be operable.

After the composition useful in preparing the elastic fibres and films of this invention has been prepared, the same may then be shaped into fibres and then into nonwoven structures or films using any of the techniques well known in the prior art. Suitable methods for preparing the fibre, then, include spun-bonding, spun-lacing, melt spinning, melt blowing and the like. Similarly, the nonwoven structure may then be fashioned from the fibre using any of the techniques known to be useful in combination with the particular method selected in forming the fibre. Of these, melt blowing techniques are particularly preferred for forming the fibre and the nonwoven structure. Apparatus and methods for melt blowing the fibre and subsequently forming a nonwoven web are disclosed in such U.S. Patents as U.S. Patent Nos. 3,755,527; 3,841,953; 3,849,241; 3,978,185 and 4,048,364.

In a preferred embodiment, the composition used to prepare the elastic fibres and films of this invention will comprise at least one A-B-A triblock copolymer and may optionally contain one or more diblock copolymers. In a more preferred embodiment, the composition used to prepare the elastic fibre and film will comprise two different A-B-A triblock copolymers and one A-B′ diblock copolymer. In this more preferred embodiment, the first of the two A-B-A triblock copolymers will contain A polymer blocks predominantly consisting of polystyrene and having a weight-average molecular weight within the range from 5,000 to 9,000 and B polymer blocks predominantly consisting of substantially hydrogenated polybutadiene and having weight-average molecular weights within the range from 30,000 to 50,000. In this more preferred embodiment, the second of the A-B-A triblock copolymers will contain A blocks having a weight-average molecular weight within the range from 4,000 to 7,000 and B polymer blocks having a weight-average molecular weight within the range from 55,000 to 90,000. Also in this more preferred embodiment, the A-B′ diblock will contain A polymer blocks having a weight-average molecular weight within the range from 4,000 to 9,000 and B′ polymer blocks having a weight-average molecular weight within the range from 7,500 to 67,500. In an even more preferred embodiment, the first of the A-B-A triblocks will contain A polymer blocks having a weight-average molecular weight within the range from 7,000 to 7,500 and B polymer blocks having a weight-average molecular weight within the range from 33,000 to 38,000.

In this even more preferred embodiment, the second of the A-B-A triblock copolymers will contain A polymer blocks having a weight-average molecular weight within the range from 5,000 to 6,000 and B polymeric blocks having a weight-average molecular weight within the range from 65,000 to 80,000. Also, in this even more preferred embodiment, the A-B′ diblock will contain A polymeric blocks having a weight-average molecular weight within the range from 5,000 to 7,500 and B′ polymeric blocks within the range from 8,250 to 60,000. In each of these more preferred embodiments, the block copolymer blend in the composition used to prepare the elastic fibre or film of this invention will comprise from 50 wt% to 90 wt% of the first of the A-B-A triblock copolymers and from 10 wt% to 50 wt% of a mixture consisting of from 65 wt% to 75 wt% of the second A-B-A triblock and from 35 wt% to 25 wt% of the A-B′ diblock. In a most preferred embodiment, from 50 wt% to 90 wt% of the total block copolymer used in the composition will be a first A-B-A triblock copolymer wherein A is a polystyrene block having a weight-average molecular weight of 7,200 and B is a hydrogenated polybutadiene block having a weight-average molecular weight of 35,000 and from 50 wt% to 10 wt% of a block copolymer blend comprising from 65 wt% to 75 wt% of a second A-B-A triblock copolymer wherein A is a polystyrene block having a weight-average molecular weight of 5,300 and B is a hydrogenated polybutadiene block having a weight-average molecular weight of 73,000 and from 35 wt% of 25 wt% of an A-B′ diblock copolymer wherein A is a polystyrene block having a molecular weight of 5,300 and B′ is a hydrogenated polybutadiene block having a molecular weight of 36,500. Also in the preferred and more preferred embodiments, the composition used to prepare the elastic fibre or film will contain from 8 parts to 35 parts, by weight, per 100 parts, by weight, of combined block copolymer of a low molecular weight anionic polystyrene and most preferably the composition will comprise from 8 parts to 20 parts, by weight, per 100 parts, by weight, of combined block copolymer of a low molecular polystyrene. In the preferred, more preferred and most preferred embodiments, the composition will contain an anionic polystyrene having a weight-average molecular weight within the range from 1,900 to 4,500. Also in a preferred embodiment, the composition used to prepare the elastic fibre or film will contain from 0 parts to 10 parts, by weight, per 100 parts, by weight, of combined block copolymer and most preferably the composition will contain from 0 parts to 5 parts, by weight, per 100 parts, by weight, of combined block copolymer of a wax.

The invention is further illustrated by the following examples however without restriction of its scope to these specific embodiments.

EXAMPLE 1

In this example, a composition which would be useful in the preparation of an elastic fibre was prepared. The composition contained 70 wt% of an A-B-A triblock copolymer wherein A was a polystyrene block having a weight-average molecular weight of 5,300 and B was a hydrogenated conjugated diolefin block having a weight-average molecular weight of 73,000 and 30% of an A-B' diblock copolymer wherein A was a polystyrene block having a weight-average molecular weight of 5,300 and B' was a hydrogenated polybutadiene block having a weight-average molecular weight of 36,500. The composition also contained 30 parts, by weight, per 100 parts of combined block copolymer of an anionic polystyrene having a weight-average molecular weight of 4,500. The composition also contained 40 parts, by weight, per 100 parts of combined block copolymer of a Shellwax 100 wax. The composition was prepared by admixing the components in the molten phase using a Brabender mixer. After preparation of the composition, its viscosity, in poise, was determined at 3,500 sec$^{-1}$ and 232 °C (450 °F). After the composition was allowed to cure, various properties were then determined. The actual properties determined and the results obtained are summarized in the following Table:

TABLE 1

| Physical Properties | Value |
|---|---|
| Viscosity, 3500 sec$^{-1}$, 232 °C, poise | 75 |
| Stress relaxation after 5 extension cycles, % | 17 |
| Set after 5 extension cycles, % | 20 |
| Hysteresis Loss, % | 43 |
| Dynamic Hysteresis, % | 19 |
| Set, % | 42 |
| Tensile Strength, psi | 605 |
| Elongation, % | 590 |
| Hardness, Shore A, 10 sec. | 66 |

As will be apparent from the data summarized in the preceding Table, the viscosity of 75 poise is well within that required for the formation of a fibre via melt blowing techniques. As will also be apparent from the data summarized in the preceding Table, one would expect such a fibre to exhibit reasonably good physical properties.

EXAMPLE 2

In this example, a composition suitable for use in forming elastic fibres or films was prepared. The composition contained a block copolymer blend comprising 33 wt% of an A-B-A triblock copolymer wherein A was a polystyrene block having a weight-average molecular weight of 7,200 and B was a hydrogenated polybutadiene block having a weight-average molecular weight of 35,000, about 46 wt% of an A-B-A triblock copolymer wherein A was a polystyrene block having a weight-average molecular weight of 5,300 and B was a hydrogenated polybutadiene block having a weight-average molecular weight of 73,000 and 17 wt% of an A-B' diblock wherein A was a polystyrene block having a weightaverage molecular weight of 5,300 and B' was a hydrogenated polybutadiene block having a weight-average molecular weight of 36,500. The composition also contained 10 parts of an anionic polystyrene, having a weight-average molecular weight of 1,900, per 100 parts, by weight, of combined block copolymer, 10 parts, by weight, of a paraffinic wax having a melting point of 51 °C (124 °F) (Shellwax 100) per 100 parts, by weight, of combined block copolymer and 50 parts of an extender oil per 100 parts, by weight, of combined block copolymer. The composition also contained a minor amount of a stabilizer, colorant and lubricant. After preparation, the same physical properties were determined as were determined on the composition prepared in Example 1. These physical properties and the results obtained are summarized in the following Table:

TABLE 2

| Physical Properties | Value |
|---|---|
| Viscosity, 3500 sec$^{-1}$, 232 °C, poise | 157 |
| Stress relaxation after 5 extension cycles, % | 13 |
| Set after 5 extension cycles, % | 7 |
| Hysteresis Loss, % | 23 |
| Dynamic Hysteresis, % | 9 |
| Set, % | 21 |
| Tensile Strength, psi | 275 |
| Elongation, % | 610 |
| Hardness, Shore A, 10 sec. | 30 |

As will be apparent from the data summarized in Table 2 the viscosity of the composition prepared in this example, while higher than that of the composition prepared in Example 1, remains well within the requirements for the satisfactory production of a fibre via melt blowing. As will also be apparent from the data summarized in the preceding Table 2, one would again expect a fibre thus produced to exhibit good physical properties.

EXAMPLE 3

In this example, a composition suitable for use in the preparation of elastic fibres and films via melt blowing was prepared. The composition contained an A-B-A triblock copolymer wherein A was a polystyrene block having a weight-average molecular weight of 7,200 and B was a polybutadiene block, which was hydrogenated after preparation of the block copolymer having a weight-average molecular weight before hydrogenation of 35,000. The composition also contained 10 parts, by weight, per 100 parts, by weight, of block copolymer of an anionic polystyrene having a weight-average molecular weight of 4,500, 10 parts, by weight, per 100 parts, by weight, of block copolymer of a polyethylene wax, 10 parts, by weight, per 100 parts, by weight, of block copolymer of a paraffinic wax having a melting point of 51 °C (124 °F) (Shellwax 100) and 75 parts, by weight, per 100 parts, by weight, of an extender oil. After preparation, the same physical properties as were determined in Examples 1 and 2 were determined for the composition prepared in this example. The physical properties actually measured and the results obtained are summarized in the following Table:

TABLE 3

| Physical Properties | Value |
|---|---|
| Viscosity, 3500 sec$^{-1}$, 232 °C, poise | 48 |
| Stress relaxation after 5 extension cycles, % | 10 |
| Set after 5 extension cycles, % | 11 |
| Hysteresis Loss, % | 24 |
| Dynamic Hysteresis, % | 13 |
| Set, % | 17 |
| Tensile Strength, psi | 280 |
| Elongation, % | 475 |
| Hardness, Shore A, 10 sec. | 35 |

As will be apparent from the data summarized in the preceding Table 3, the copolymer composition comprising an A-B-A triblock copolymer provided a composition having a viscosity well below that of the composition prepared in Examples 1 and 2. As will also be apparent from the data summarized in the preceding Table 3, one would again expect a fibre prepared from the composition to exhibit good physical properties.

EXAMPLE 4

In this example, a composition suitable for use in forming elastic fibres or films was prepared. The composition contained a block copolymer blend comprising 67 wt% of an A-B-A triblock copolymer wherein A was a polystyrene block having a weight-average molecular weight of 7,200 and B was a hydrogenated polybutadiene block having a weight-average molecular weight of 35,000, 23 wt% of an A-B-A triblock copolymer wherein A was a polystyrene block having a weight-average molecular weight of 5,300 and B was a hydrogenated polybutadiene block having a weight-average molecular weight of 73,000 and 10 wt% of an A-B′ diblock wherein A was a polystyrene block having a weight-average molecular weight of 5,300 and B′ was a hydrogenated polybutadiene block having a weight-average molecular weight of 36,500. The composition also contained 14 parts of a copolymer of alpha-methylstyrene and styrene per 100 parts, by weight, of combined block copolymer, 7 parts, by weight, of a low viscosity polyethylene per 100 parts, by weight, of combined block copolymer, 14 parts, by weight, per 100 parts, by weight, of total block copolymer of a hydrogenated hydrocarbon resin and 24 parts, by weight, of an extender oil per 100 parts, by weight, of combined block copolymer. The composition also contained a minor amount of a stabilizer, colorant and lubricant. After preparation, the same physical properties were determined as were determined on the composition prepared in Example 1. These physical properties and the results obtained are summarized in the following Table:

TABLE 4

| Physical Properties | Value |
|---|---|
| Viscosity, 3500 sec$^{-1}$, 232 °C, poise | 580 |
| Stress relaxation after 5 extension cycles, % | 6 |
| Set after 5 extension cycles, % | 10 |
| Hysteresis Loss, % | 15 |
| Dynamic Hysteresis, % | 6 |
| Set, % | 8 |
| Tensile Strength, psi | 1,315 |
| Elongation, % | 700 |
| Hardness, Shore A, 10 sec. | 54 |

As will be apparent from the data summarized in the preceding Table 4, the viscosity of the composition prepared in this example, while higher than that of the composition prepared in Example 1, remains well within the requirements for the satisfactory production of a fibre via melt blowing. As will also be apparent from the data summarized in the preceding Table, one would again expect a fibre thus produced to exhibit good physical properties.

EXAMPLE 5

In this example, a composition suitable for use in forming elastic fibres or films was prepared. The composition contained a block copolymer blend comprising 67 wt% of an A-B-A triblock copolymer wherein A was a polystyrene block having a weight-average molecular weight of 7,200 and B was a hydrogenated polybutadiene block having a weight-average molecular weight of 35,000, about 23 wt% of an A-B-A triblock copolymer wherein A was a polystyrene block having a weight-average molecular weight of 5,300 and B was a polybutadiene block having a weight-average molecular weight of 73,000 and 10 wt% of an A-B′ diblock wherein A was a polystyrene block having a weight-average molecular weight of 5,300 and B′ was a hydrogenated polybutadiene block having a weight-average molecular weight of 36,500. The composition also contained 12 parts of a copolymer of alpha-methylstyrene and styrene per 100 parts, by weight, of combined block copolymer, 8 parts, by weight, of a low viscosity polyethylene per 100 parts, by weight, of combined block copolymer, 16 parts, by weight, per 100 parts, by weight, of combined block copolymer of a low molecular weight hydrocarbon resin and 14 parts, by weight, of an extender oil per 100 parts, by weight, of combined block copolymer. The composition also contained a minor amount of a stabilizer, colorant and lubricant. After preparation, the same physical properties were determined as were determined on the composition prepared in Example 1. These physical properties and the results obtained are summarized in the following Table:

TABLE 5

| Physical Properties | Value |
|---|---|
| Viscosity, 3500 sec$^{-1}$, 232 $^\circ$C, poise | 670 |
| Stress relaxation after 5 extension cycles, % | 10 |
| Set after 5 extension cycles, % | 5 |
| Hysteresis Loss, % | 21 |
| Dynamic Hysteresis, % | 8 |
| Set, % | 11 |
| Tensile Strength, psi | 1,990 |
| Elongation, % | 700 |
| Hardness, Shore A, 10 sec. | 60 |

As will be apparent from the data summarized in the preceding Table 5, the viscosity of the composition prepared in this example, while higher than that of the composition prepared in Example 1, remains well within the requirements for the satisfactory production of a fibre via melt blowing. As will also be apparent from the data summarized in the preceding Table 5, one would again expect a fibre thus produced to exhibit good physical properties.

Claims

1. An elastomeric fibre or film comprising
    (i) at least one block copolymer comprising: at least two polymeric blocks containing predominantly monoalkenyl aromatic hydrocarbon monomer units having a weight-average molecular weight within the range from 4,000 to 50,000 (A) and at least one polymeric block containing predominantly hydrogenated conjugated diolefin monomer units having a weight-average molecular weight within the range from 10,000 to 200,000 (B),
    (ii) from 5 parts to 50 parts, by weight, per 100 parts, by weight, of block copolymer of a relatively low molecular weight polymer selected from the Group consisting of homopolymers of anionic polystyrene, homopolymers of alpha-methylstyrene, hydrogenated polystyrene, and copolymers of alpha-methylstyrene and styrene, said relatively low molecular weight polymer having a weight-average molecular weight within the range from 1,000 to 17,000, and
    (iii) from 0 parts to 50 parts, by weight, per 100 parts, by weight, of block copolymer of a wax.
2. The elastomeric fibre or film of claim 1, wherein said polymeric blocks containing predominantly monoalkenyl aromatic hydrocarbon monomer units have a weight-average molecular weight within the range from 4,000 to 9,000 and said polymeric blocks containing predominantly conjugated diolefin monomer units have a weight- average molecular weight within the range from 30,000 to 90,000.
3. The elastomeric fibre or film of claim 1, wherein at least one of said polymeric blocks containing predominantly monoalkenyl aromatic hydrocarbon monomer units have a weight-average molecular weight within the range from 7,000 to 7,500 and at least one of said polymeric blocks containing predominantly conjugated diolefin monomer units have a molecular weight within the range from 33,000 to 38,000.
4. The elastomeric fibre or film of claim 3, wherein at least one of said polymeric blocks containing predominantly monoalkenyl aromatic hydrocarbon monomer units have a molecular weight of 7,200 and at least one of said polymeric blocks containing predominantly conjugated diolefin monomer units have a weight-average molecular weight of 35,000.
5. The elastomeric fibre or film of claim 1, wherein at least one of said polymeric blocks containing predominantly monoalkenyl aromatic hydrocarbon monomer units have a weight-average molecular weight within the range of from 5,000 to 6,000 and at least one of said polymeric blocks containing predominantly conjugated diolefin monomer units have a weight-average molecular weight within the range from 65,000 to 85,000.
6. The elastomeric fibre or elastomeric film of claim 5, wherein at least one of said polymeric blocks containing predominantly monoalkenyl aromatic hydrocarbon monomer units have a weight-average molecular weight of 5,300 and at least one of said polymeric blocks containing predominantly conjugated diolefin monomer units have a weight-average molecular weight of 73,000.

7. The elastomeric fibre or film of claim 1, which comprises in addition one or more block copolymers comprising a single polymeric block containing predominantly monoalkenyl aromatic hydrocarbon monomer units (A) and a single polymeric block containing predominantly, hydrogenated conjugated diolefin monomer units (B').

8. The elastomeric fibre or film of claim 7, wherein said polymeric blocks containing predominantly monoalkenyl aromatic hydrocarbon monomer units have a weight-average molecular weight within the range of from 5,000 to 7,500 and said polymer blocks containing predominantly hydrogenated, conjugated diolefin monomer units have a weight-average molecular weight within the range of from 8,250 to 60,000.

9 . The elastomeric fibre or film of claim 8, wherein said polymeric blocks containing predominantly monoalkenyl aromatic hydrocarbon monomer units have a weight-average molecular weight of 5,300 and said polymeric blocks containing predominantly hydrogenated, conjugated diolefin monomers have a weight-average molecular weight of 36,500.

10. The elastomeric fibre of any one of claims 1-9 wherein said monoalkenyl aromatic hydrocarbon monomer is styrene and said conjugated diolefin monomer is butadiene.

11. The elastomeric fibre or film of claims 1-10, comprising two A-B-A triblock copolymers, the first A-B-A triblock copolymer having A polymer blocks with a weight-average molecular weight within the range from 5,000 to 9,000 and B polymeric blocks having a weight-average molecular weight within the range from 30,000 to 50,000, the second A-B-A triblock copolymer having A polymeric blocks with weight-average molecular weights within the range from 4,000 to 7,000 and B polymeric blocks having a weight-average molecular weight within the range from 55,000 to 90,000, and wherein said A-B' diblock copolymer has A polymeric blocks having weight-average molecular weights within the range from 4,000 to 9,000 and B' polymeric blocks having a weight-average molecular weight within the range from 7,500 to 67,500.

12. The elastomeric fibre or film of claim 11, wherein said first A-B-A triblock copolymer has A polymeric blocks having a weight-average molecular weight of 7,200 and B polymeric blocks having a weight-average molecular weight of 35,000 and second A-B-A triblock copolymer having A polymeric blocks with a weight-average molecular weight of 5,300 and B polymeric blocks having a weight-average molecular weight of 73,000, and wherein said A-B' diblock copolymer has A polymeric blocks having a weight-average molecular weight of 5,300 and B' polymeric blocks having a weight-average molecular weight of 36,500.

13. The elastomeric fibre or film according to any one of the claims 1-12, wherein said relatively low molecular weight polymer is present at a concentration within the range from 8 parts to 35 parts, by weight, per 100 parts, by weight, of combined block copolymer and said wax is present at a concentration within the range from 0 parts to 10 parts, by weight, per 100 parts, by weight, combined block copolymer.

14. The elastomeric fibre or film of claim 13, wherein said relatively low molecular weight polymer is present at a concentration within the range from 8 parts to 20 parts, by weight, per 100 parts, by weight, combined block copolymer and said wax is present at a concentration within the range from 0 parts to 5 parts, by weight, per 100 parts, by weight, combined block copolymer.

15. The elastomeric fibre or film of claim 14, wherein said relatively low molecular weight polymer is an anionic polystyrene.

16. The elastomeric fibre or film of claim 15, wherein said anionic polystyrene has a weight-average molecular weight within the range from 1,900 to 4,500.

17. A nonwoven structure prepared with an elastomeric fibre according to any one of the claims 1-16.